# EUROPÄISCHE PATENTSCHRIFT

(11) **EP 3 898 250 B1**
(45) Veröffentlichungstag und Bekanntmachung des Hinweises auf die Patenterteilung: **03.04.2024**
(21) Anmeldenummer: 19831662.2
(22) Anmeldetag: 17.12.2019
(51) Int. Cl.: B42D 25/328, G03H 1/00, G03H 1/24, G03H 1/26, G03H 1/02

(54) **HOLOGRAMMMASTER FÜR EINE HERSTELLUNG VON INDIVIDUALISIERTEN HOLOGRAMMEN MIT KINETISCHEN BEUGUNGSSTRUKTUREN**
HOLOGRAM MASTER FOR PRODUCING CUSTOMISED HOLOGRAMS WITH KINETIC DIFFRACTION PATTERNS
MATRICE HOLOGRAPHIQUE POUR UNE FABRICATION D'HOLOGRAMMES INDIVIDUALISÉS PRÉSENTANT DES STRUCTURES DE DIFFRACTION CINÉTIQUES

(30) Priorität: 17.12.2018 DE 102018221975
(43) Veröffentlichungstag der Anmeldung: 27.10.2021
(73) Patentinhaber: Bundesdruckerei GmbH, 10969 Berlin (DE)
(72) Erfinder: KUNATH, Christian, 12203 Berlin (DE); SPRENGER, Martin, 10317 Berlin (DE); KLÜNDER, Kathrin, 10997 Berlin (DE); GAHLBECK, Jeffrey, 15517 Fürstenwalde (DE)
(74) Vertreter: Patentanwälte Bressel und Partner mbB
(86) Internationale Anmeldenummer: PCT/EP2019/085683
(87) Internationale Veröffentlichungsnummer: WO 2020/127288

(56) Entgegenhaltungen:
- EP-B1- 0 896 260
- DE-A1- 10 308 305
- DE-A1-102006 006 323
- DE-A1-102006 016 139
- DE-A1-102007 023 560
- DE-A1-102013 113 340
- DE-A1-102014 106 340
- DE-A1-102015 226 602

## Beschreibung

Die Erfindung betrifft einen Hologrammmaster für eine Herstellung von individualisierten Hologrammen mit kinetischen Beugungsstrukturen und ein Verfahren zum Herstellen eines individualisierten Sicherheitshologramms mit kinetischen Beugungsstrukturen.

Im Bereich der Wert- und Sicherheitsdokumente ist es bekannt, Beugungsstrukturen als Sicherheitsmerkmale zu verwenden. Z. B. zeigt die DE 10 2015 226 602 A1 eine Mikrostrukturierung, die in einem Bereich als Beugungsgitter zum Hervorrufen eines Beugungseffekts ausgebildet ist. Ein Sicherheitsmerkmal ist ein Merkmal, welches ein Nachahmen, Verfälschen oder Duplizieren eines Gegenstands, auf dem oder in dem das Sicherheitsmerkmal integriert ist, erschweren oder unmöglich machen soll. Ein körperlicher Gegenstand mit einem Sicherheitsmerkmal wird auch als Sicherheitselement bezeichnet.

Als individualisiert bezeichnet man ein Sicherheitsmerkmal, Sicherheitselement oder Sicherheitsdokument, wenn dieses individuelle Informationen enthält, die das Sicherheitsmerkmal, Sicherheitselement oder Sicherheitsdokument von gleichartigen Sicherheitsmerkmalen, Sicherheitselement oder Sicherheitsdokument unterscheidet. Eine Seriennummer individualisiert beispielsweise Banknoten oder Personaldokumente. Werden persönliche Daten einer Person als Individualisierungsinformation in ein Sicherheitsdokument oder Sicherheitselement gespeichert, das dieser Person zugeordnet ist, so wird auch von einer Personalisierung gesprochen. Für die Herstellung eines Sicherheitsmerkmals, -elements oder Sicherheitsdokuments ist entscheidend, dass einzelne Exemplare einer Serienfertigung verschieden und somit individuell hergestellt werden können.

Im Stand der Technik sind unterschiedliche Licht beugende Sicherheitsmerkmale und Sicherheitselemente bekannt. Weit verbreitet sind Hologramme. Beispielsweise beschreibt die EP 0 896 260 B1 die Herstellung von Hologrammen für Sicherheitsdokumente. Die Beugung von Hologrammen basiert auf gespeicherten Interferenzinformationen von miteinander interferierenden kohärenten Lichtfeldern. Ist die Interferenzinformation in einer dünnen Schicht oder einem dünnen Bereich einer Schicht gespeichert, deren Schicht- oder Bereichsdicke der Wellenlänge des Lichts der interferierenden Lichtfelder entspricht oder kleiner ist, so spricht man von dünnen Hologrammen. Sind die Interferenzinformationen in einer Schicht oder einem Bereich der Schicht gespeichert, deren Schicht- oder Bereichsdicke in der Größenordnung eines Vielfachen der Wellenlänge des Lichts liegt, so spricht man von Volumenhologrammen.

Ferner werden Hologramme danach unterschieden, ob die Rekonstruktion in Transmission oder in Reflexion erfolgt. Insbesondere Oberflächenhologramme, also dünne Hologramme, lassen sich in einer Massenproduktion replizieren, indem die Reliefstruktur der Oberfläche, in der die Interferenzinformation gespeichert ist, mittels eines Prägestempels oder Ähnlichen in ein Kunststoffmaterial übertragen wird und zum Erreichen einer höheren Effizienz die erhaltene Reliefstruktur mit einem Material hohen Brechungsindexes, welches transparent ist, oder einer Metallschicht beschichtet wird. Obwohl dünne Hologramme im Sinne der Holographie nur als Transmissionshologramme herstellbar sind, wird über die Beschichtung erreicht, dass das in Transmission erzeugte Beugungsbild in der Beugungsebene gespiegelt wird, so dass eine Beobachtung in Reflexion möglich ist.

Volumenhologramme lassen sich nicht auf diese Weise vervielfältigen. Hierfür ist nach wie vor eine Belichtung eines fotoempfindlichen Materials mit den interferierenden Lichtfeldern notwendig.

Volumenreflexionshologramme lassen sich in einem sogenannten Kontaktkopierverfahren duplizieren. Hierfür wird auf oder unmittelbar vor einem Hologrammmaster, der Beugungsstrukturen und/oder reflektierende Strukturen aufweist, ein holografisches Aufzeichnungsmaterial angeordnet. In der Regel wird das holografische Aufzeichnungsmaterial mit dem Hologrammmaster in Kontakt gebracht. Hierdurch befindet sich das fotoempfindliche Aufzeichnungsmaterial relativ zu den Beugungsstrukturen in Ruhe. Wird nun der Hologrammmaster durch das fotoempfindliche Aufzeichnungsmaterial belichtet, so wird dieses an dem Hologrammmaster reflektierend gebeugt und/oder reflektiert. Das gebeugte und/oder reflektierte Licht interferiert dann in dem fotoempfindlichen Aufzeichnungsmaterial mit dem das fotoempfindliche Aufzeichnungsmaterial bei der Beleuchtung des Hologrammmasters durchstrahlenden Licht, so dass ein Interferenzmuster entsteht und in dem fotoempfindlichen Aufzeichnungsmaterial als Hologramm gespeichert wird. Volumenreflexionshologramme können somit als Hologrammmaster verwendet und vielfach dupliziert werden.

In der EP 0 896 269 A2 ist ein solches Verfahren zum Herstellen eines Hologrammmasters aus einer Streuscheibe ausführlicher beschrieben. Wird beim anschließenden Kopierverfahren der Hologrammmaster örtlich mit Licht unterschiedlicher Intensität beleuchtet, so wird dieses Intensitätsmuster in das kopierte Hologramm übertragen. Wird die Intensität beispielsweise gemäß den Schwarz/Weiß- oder Graustufenwerten eines Portraitbildes moduliert, so entsteht ein Hologramm, bei dessen Rekonstruktion eine unterschiedlich hell reflektierende Streuscheibe erscheint, auf der das Portraitbild über die sich ergebenden Helligkeitsabstufungen sichtbar ist.

Im Stand der Technik sind darüber hinaus sogenannte kinetische Beugungsstrukturen bekannt, die auch als Kinegram(m)e oder Exegram(m)e bekannt sind. Diese Beugungsstrukturen, die ursprünglich nicht auf der Interferenz von Lichtfeldern beruhen, lassen sich durch Oberflächenstrukturierungen beispielsweise in verspiegelten Oberflächen ausbilden. Bei diesen Strukturen rekonstruieren unter unterschiedlichen Betrachtungsrichtungen unterschiedliche Bereiche, sodass beispielsweise die Buchstaben eines Schriftzugs beim Wechsel der Betrachtungsrichtung nacheinander im Beugungsbild erscheinen. Wird die gleiche geometrische Struktur an unterschiedlichen Stellen angeordnet, die unter den verschiedenen Betrachtungsrichtungen im Beugungsbild erscheinen, so entsteht der Eindruck, dass die geometrische Struktur sich in der Ebene der Beugungsstrukturen bei der Rekonstruktion bewegt. Daher werden diese Strukturen auch als kinetische Strukturen bezeichnet.

Solche kinetischen Strukturen lassen sich von einem Master ebenso wie Volumenhologramme in einem Kontaktkopierverfahren holografisch in ein fotoempfindliches Aufzeichnungsmaterial übertragen.

Die Tatsache, dass der Master im Bereich der kinetischen Strukturen eine verspiegelte Oberfläche aufweist, verhindert eine individualisierte Belichtung in denselben Bereich, in den die kinetischen Strukturen belichtet sind. In der Regel ist eine solche verspiegelte Oberfläche metallisch verspiegelt. Die Belichtung scheitert, insbesondere wenn das Hologramm für eine Rekonstruktionsgeometrie hergestellt wird, bei der die Einstrahlung von Referenzlicht und die Beugungsrichtung, unter der das Beugungsbild rekonstruiert, nicht symmetrisch zur Lotrechten der Oberfläche des Hologramms sind. Die Verspiegelung des ebenen "Hintergrunds" der herkömmlichen kinetischen Strukturen verhindert dieses.

Die DE 10 2007 023 560 A1 beschreibt einen Mehrschichtkörper und mit einer transparenten Schicht, die zumindest teilweise in einem Fenster oder in einem transparenten Bereich des Trägersubstrats angeordnet ist. Die transparente Schicht weist mindestens einen ersten und einen zweiten Teilbereich mit variierender Brechzahl auf, die in der von der transparenten Schicht aufgespannten Schichtebene nebeneinander angeordnet und zumindest teilweise in dem Fenster oder in dem transparenten Bereich des Trägersubstrats angeordnet sind. Jeder der Teilbereiche weist eine Vielzahl periodisch angeordneter, ein optisch wirkendes Element ausbildender, durch Brechzahlvariation gebildeter Knoten, die in im wesentlichen parallel zueinander verlaufenden Ebenen angeordnet sind, auf. Die Ebenen in dem mindestens ersten Teilbereich sind nicht parallel zu den Ebenen in dem mindestens zweiten Teilbereich. Mindestens in einem der Teilbereiche verlaufen die Ebenen weder parallel noch senkrecht zu der Schichtebene. Auf diese Weise wird sowohl das auf die Vorderseite als auch das auf die Rückseite des Mehrschichtkörpers fallende Licht durch die optisch wirkenden Elemente gebeugt und die Elemente bilden im Auflicht eine in Vorderansicht und in Rückansicht unterschiedliche optische Wirkung aus.

In Hologrammen, welche unter der Bezeichnung Identigramm bekannt sind und in deutschen Pass- und Personalausweisdokumenten verwendet werden, ist es zwar bekannt, dass in dem Bereich des Volumenhologramms der Streuscheibe, der für die Individualisierung vorgesehen ist, vier Aussparungen in Form von stilisierten Adlern enthalten sind, welche kinetische Strukturen darstellen, jedoch in dem Beugungsbild der Streuscheibe als nicht beugende Bereiche auftreten und unter abweichenden Beugungsbedingungen als kinetische Strukturen erkennbar sind.

Bei der Herstellung werden die Bereiche der kinetischen Strukturen, während der Individualisierung der holografischen Masterstrukturen, maskiert. Wünschenswert ist es, kinetische Strukturen auszubilden, die sich zumindest über einen Teilbereich des Individualisierungsbereichs erstrecken, ohne die Personalisierung oder Individualisierung nennenswert zu behindern.

Eine Möglichkeit dies zu erreichen besteht darin, dass die kinetischen Strukturen in eine andere holografische Schicht als das individualisierte Hologramm kopiert werden und diese einander überlagert werden. Dies erfordert jedoch einen höheren Herstellungsaufwand und die Verwendung von zwei holografischen Schichten. Der Erfindung liegt somit die Aufgabe zugrunde, einen verbesserten Master, und ein verbessertes Verfahren zur Herstellung von individualisierten Hologrammen mit kinetischen Strukturen anzugeben, mit denen oder bei denen das Ausbilden von kinetischen Strukturen überlagert mit einem individualisierten Hologramm möglich ist und Störeffekte beim Herstellen der individualisierten Hologramme minimiert und eine verbesserte Erfassbarkeit der kinetischen Strukturen geschaffen wird.

Die Aufgabe wird erfindungsgemäß durch einen Hologrammmaster gemäß Patentanspruch 1 und ein Verfahren zum Herstellen eines Hologrammmasters gemäß Patentanspruch 8 gelöst. Vorteilhafte Ausgestaltungen der Erfindung ergeben sich aus den Unteransprüchen.

Der Erfindung liegt die Idee zugrunde, den Hintergrundbereich, in dem die kinetischen Strukturen ausgebildet werden, als holographisches Reflexionsgitter auszubilden. Insbesondere eignet sich hierfür ein Blazegitter. Auf dem verspiegelten Blazegitter oder in dem verspiegelten Blazegitter können zum einen die feinen Beugungsstrukturen für die kinetischen Strukturen ausgebildet werden, zum anderen können Bereiche hierzwischen als Hintergrund genutzt werden, um diesen Hintergrund analog wie das Hologramm einer Streuscheibe mittels dem ortsaufgelöst intensitätsmodulierten Licht individualisiert in ein Hologramm zu kopieren.

Insbesondere wird somit ein Hologrammmaster für die Herstellung von individualisierten Hologrammen mit kinetischen Beugungsstrukturen geschaffen, welcher umfasst: einen zusammenhängenden Individualisierungsbereich der mindestens einen ersten, vorzugsweise zusammenhängenden, Beugungsbereich umfasst, wobei der mindestens eine erste Beugungsbereich ein verspiegeltes Blazegitter mit darin integrierten oder darauf integrierten kinetischen Beugungsstrukturen aufweist. Ein Blazegitter ist ein Gitter, welches eine sägezahnartige Struktur aufweist, bei dem somit in regelmäßigen Abständen gegen die Gesamtoberfläche des Gitters verkippte verspiegelte Flächen existieren. Aufgrund von Herstellungstoleranzen können kleinste Abweichungen zum idealen Sägezahnmuster existieren. Mit einem solchen Hologrammmaster lassen sich individualisierte Hologramme herstellen.

Um beim Kontaktkopieren des Hologrammmasters in ein kopiertes Sicherheitshologramm keine Newtonringe als störenden Effekt zu erhalten, ist erfindungsgemäß vorgesehen, dass der Hologrammmaster eine Anti-Newton-Beschichtung aufweist. Eine solche Beschichtung besitzt eine leicht aufgeraute Oberfläche. Ein vorteilhafter Nebeneffekt der Anti-Newton-Beschichtung liegt darin, dass auch der Winkelbereich, unter dem das an dem Blazegitter gebeugte Licht erfassbar ist, leicht aufgeweitet wird, da die Anti-Newton-Beschichtung aufgrund der leichten Oberflächenrauigkeit ebenfalls eine Strahlaufweitung, ähnlich wie das Hologramm einer Streuscheibe, jedoch zu einem geringen Ausmaß, bewirkt. Nach wie vor lassen sich die aneinander angrenzenden ersten und zweiten Beugungsbereiche, die zum einen ein Blazegitter und zum anderen eine holografische Streuflächenstruktur aufweisen, bei der Rekonstruktion aufgrund unterschiedlicher Betrachtungs- oder Erfassungswinkelbereiche, unter denen die individualisierte Information in den jeweiligen Bereichen erfassbar ist, unterscheiden.

Ein vorgeschlagenes Verfahren zum Herstellen eines individualisierten Sicherheitshologramms mit kinetischen Beugungsstrukturen umfasst die Schritte: Bereitstellen eines hier beschriebenen erfindungsgemäßen Hologrammmasters, Bereitstellen eines fotoempfindlichen holografischen Aufzeichnungsmaterials; Anordnen des holografischen Aufzeichnungsmaterials in Kontakt mit dem Hologrammmaster; Erzeugen von kohärentem Licht; Einstrahlen des kohärenten Lichts durch das holografische Aufzeichnungsmaterial auf den Hologrammmaster und Erzeugen von gebeugtem und/oder reflektiertem Licht, welches jeweils in dem eingestrahlten kohärenten Licht in dem holografischen Aufzeichnungsmaterial interferiert, um das individualisierte Sicherheitshologramm zu speichern, wobei eine Intensität des eingestrahlten Lichts in dem Individualisierungsbereich örtlich unterschiedlich moduliert wird, um eine individualisierte Information in dem Sicherheitshologramm zu speichern, wobei eine Intensität des eingestrahlten Lichts in dem Individualisierungsbereich örtlich unterschiedlich bezüglich der Intensität moduliert wird, um eine individualisierte Information in einem ersten Beugungsbereich zu speichern, in dem zusätzlich kinetischen Beugungsstrukturen, vorzugsweise durch eine gleichzeitige Belichtung, gespeichert werden, wobei beim Anordnen des holographischen Aufzeichnungsmaterials in Kontakt mit dem Hologrammmaster das holographischen Aufzeichnungsmaterials in Kontakt mit der Anti-Newton-Beschichtung des Hologrammmasters gebracht wird.

Man erhält somit ein Sicherheitshologramm mit kinetischer und individualisierter Beugungsstruktur, hergestellt nach dem erfindungsgemäßen Verfahren, wobei das Sicherheitshologramm einen zusammenhängenden Individualisierungsbereich umfasst, welchen einen ersten zusammenhängenden Beugungsbereich umfasst, in dem ein Hologramm eines Blazegitters gespeichert ist, das örtlich unterschiedliche Beugungseffizienz aufweist, sodass bei der Rekonstruktion unter einer Sollbeugungsrichtung eine in dem örtlichen Beugungseffizienzmuster gespeicherte individualisierte Information erfassbar ist und unter abweichenden Beugungsrichtungen zu der Sollbeugungsrichtung in dem ersten Beugungsbereich des Individualisierungsbereichs kinetische Strukturen erfassbar sind.

Der Vorteil der Erfindung besteht darin, dass in einem holografischen Aufzeichnungsmaterial im selben Bereich oder Gebiet, sowohl eine individualisierte Information in Form unterschiedlicher Helligkeitswerte einer ansonsten einheitlichen oder nahezu einheitlichen Hintergrundfläche herstellbar sind und zum anderen in demselben Bereich auch kinetische Beugungsstrukturen ausgebildet werden können. Die kinetischen Beugungsstrukturen und die individualisierende Information werden vorzugsweise gleichzeitig in das holografische Aufzeichnungsmaterial belichtet. Dieses vereinfacht die Herstellung.

Hierbei ist der Hologrammmaster im ersten Beugungsbereich, der das verspiegelte Blazegitter sowie die darin integrierten oder darauf integrierten kinetischen Beugungsstrukturen umfasst, vollständig über die gesamte Fläche verspiegelt, vorzugsweise metallisch beschichtet.

In Bezug auf die Integration der kinetischen Beugungsstrukturen in das Blazegitter bedeutet "darauf integriert oder darin integriert" jeweils, dass die kinetischen Strukturen in derselben Ebene, in der das Blazegitter ausgebildet ist, ausgebildet sind. Die kinetischen Strukturen ändern hierbei lokal die Oberfläche des Blazegitters, so dass die kinetischen Strukturen aus der Blazegitteroberfläche hervorspringen und/oder in diese hineinragen. Gemeinsam bilden das Blazegitter und die kinetischen Strukturen, die in dem flächigen Bereich des Blazegitters ausgebildet sind, d.h. darin und/oder darauf integriert sind, ein gemeinsames Oberflächenrelief, welches vollflächig, d.h. durchgehend, verspiegelt ist.

Holografische Beugungsstrukturen können mit anderen Beugungseffekten als ein Blazegitter ausgebildet werden. Daher ist es zur Steigerung der Fälschungssicherheit wünschenswert, wenn der Individualisierungsbereich zusätzlich zu dem mindestens einen ersten, vorzugsweise zusammenhängenden, Beugungsbereich mindestens einen zweiten, vorzugsweise zusammenhängenden Beugungsbereich umfasst, wobei der mindestens eine zweite Beugungsbereich holografische Beugungsstrukturen aufweist.

Während das Hologramm eines Blazegitters welches als Hintergrund für die individualisierte Information verwendet wird, nur unter einem eng begrenzten Beugungswinkel wahrnehmbar ist, können holografische Beugungsstrukturen so ausgebildet werden, dass Licht in einen größeren Winkelbereich beugen. Besonders bevorzugt wird als Hintergrund, der mit unterschiedlicher Intensität des für das Kopieren verwendeten Lichts dupliziert wird, ein Hologramm eines gleichmäßig streuenden Objekts, beispielsweise einer Streuscheibe oder Ähnlichem, verwendet. Eine bevorzugte Ausführungsform der Erfindung sieht daher vor, dass die holografischen Beugungstrukturen in dem mindestens einen zweiten Beugungsbereich ein Hologramm einer gleichmäßig streuenden Fläche sind, welche Licht, das unter einer bezüglich des Hologrammmasters festgelegten Solleinfallsrichtung einfällt, in eine begrenzte Streukeule um eine ebenfalls bezüglich des Hologrammmasters definierte Sollbeugungsrichtung beugt. Hierdurch kann erreicht werden, dass die ansonsten auch bei Volumenreflexionshologrammen ebenfalls existierende starke Winkelselektivität aufgrund der Streueigenschaft des "Hologramminhalts" quasi verringert wird. In Wirklichkeit wird die Winkelselektivität nicht beeinflusst, sondern nur das Rekonstruktionslicht bei der Beugung in dem Hologramm aufgrund des darin gespeicherten Gegenstands, beispielsweise der Streuscheibe, aufgeweitet.

Vorzugsweise ist die Geometrie zwischen Solleinfallsrichtung, Oberflächennormale des Hologrammmasters und Sollbeugungsrichtung so gewählt, dass die Solleinfallsrichtung und die Sollbeugungsrichtung nicht symmetrisch zur Oberflächennormale gewählt sind. Eine bevorzugte Geometrie sieht vor, dass unter 45 Grad auf den Hologrammmaster beziehungsweise das später kopierte Hologramm auftreffendes Licht entlang der Oberflächennormale, also senkrecht zur Oberfläche des Hologrammmasters, gebeugt wird, beziehungsweise senkrecht aus einem Sicherheitshologramm austritt. Es sind jedoch auch andere Geometrien und auch symmetrische Geometrien möglich.

Besonders bevorzugt wird es, dass ein Teil der Individualisierungsinformationen, der in dem mindestens einen ersten Beugungsbereich gespeichert ist, und ein Anteil der Individualisierungsinformationen, der in dem mindestens einen zweiten Beugungsbereich gespeichert ist, bei der Rekonstruktion unter derselben Geometrie wahrnehmbar sind. Daher sieht eine Ausführungsform vor, dass das Blazegitter unter der festgelegten Solleinfallsrichtung bezüglich des Hologrammmasters einfallendes Licht in die Sollbeugungsrichtung, welche ebenfalls bezüglich der Oberflächennormale des Hologrammmasters definiert ist, beugt, wobei die Solleinfallsrichtung und die Sollbeugungsrichtung die Richtungen sind, unter denen die holografischen Beugungsstrukturen des mindestens einen zweiten Beugungsbereiches rekonstruieren. Auch für den Fall, dass die Einfallsrichtung und die Beugungsrichtung für den mindestens einen ersten Beugungsbereich und den mindestens einen zweiten Beugungsbereich nicht identisch sind, werden für das Blazegitter die Solleinfallsrichtung und die Sollbeugungsrichtung vorzugsweise nicht symmetrisch zur Oberflächennormale des Hologrammmasters gewählt.

Besonders bevorzugt wird der Blazewinkel so angepasst, dass unter der Solleinfallsrichtung einfallendes Licht an den spiegelnden Flächen des Blazegitters in der Sollbeugungsrichtung gespiegelt wird. Hierdurch kann erreicht werden, dass maximale Beugungseffizienzen in dem hergestellten Sicherheitshologramm, welche in mit maximaler Helligkeit belichteten Individualisierungsinformationsbereichen auftreten, in dem ersten Beugungsbereich annähernd gleich zu denen in dem zweiten Beugungsbereich sind. Somit kann die maximale erreichbare Beugungsintensität in dem mindestens einen ersten Beugungsbereich durch diese Maßnahme gesteigert werden.

Besonders bevorzugt wird das Blazegitter für eine Beugung von Licht mit einer Wellenlänge optimiert, die einer Rekonstruktionswellenlänge der holografischen Beugungsstrukturen des mindestens einen zweiten Beugungsbereichs entspricht. Hierdurch kann in dem Individualisierungsbereich die in den verschiedenen Beugungsbereichen gespeicherte individualisierte Information mit derselben Wellenlänge kopiert, rekonstruiert und wahrgenommen werden. Auch bei einer Weißlichtrekonstruktion mit Licht, welches unterschiedliche Wellenlängen enthält, wird somit die Information monochromatisch wahrgenommen.

Unter dem Optimieren eines Blazegitters für eine Wellenlänge wird die Wahl des Blazewinkels in der Weise verstanden, dass unter einer Solleinfallrichtung einfallendes Licht der einen Wellenlänge, dass unter einer gewünschten Beugungsordnung gebeugt wird, gemäß der geometrischen Optik an den Flächen des Blazegitters so gespiegelt wird, dass das gespiegelte Licht mit dem gebeugten Licht der gewünschten Beugungsordnung zusammenfällt.

Um zu verhindern, dass die kinetischen Strukturen, welche in dem mindestens einen ersten Beugungsbereich zusätzlich zu dem als Hintergrund ausgebildeten Blazegitter ausgebildet sind, eine Wahrnehmung der individualisierten Information unter der Sollbeugungsrichtung des Blazegitters stören, ist bei einer Ausführungsform vorgesehen, dass die kinetischen Beugungsstrukturen unter der Solleinfallsrichtung einfallendes Licht der Wellenlänge, für die das Blazegitter optimiert ist, nicht in die Sollbeugungsrichtung beugen.

Andere alternative Ausführungsformen können vorsehen, dass die kinetischen Strukturen unter der Sollbeleuchtungsrichtung des Blazegitters einfallendes Licht mit einer Beugungseffizienz, welche geringer als die maximale Beugungseffizienz des Blazegitters ist, in die Sollbeugungsrichtung beugen. Hierdurch kann auch im Bereich der kinetischen Struktur unter der Sollbetrachtungsrichtung eine Individualisierung eines Teils der kinetischen Struktur wahrgenommen werden.

Nachfolgend wird die Erfindung unter Bezugnahme auf eine Zeichnung näher erläutert: Hierbei zeigen:
- Fig. 1: eine schematische Draufsicht auf einen Hologrammmaster;
- Fig. 1a: eine schematische Schnittansicht des Hologrammmasters nach Fig. 1;
- Fig. 2: eine schematische Ansicht auf einen weiteren Hologrammmaster;
- Fig. 2a: eine schematische Schnittansicht des Hologrammmasters nach Fig. 2;
- Fig. 3: eine schematische Ansicht einer Vorrichtung zum Kontaktkopieren von Sicherheitshologrammen.
- Fig. 4: eine schematische Draufsicht auf ein Sicherheitshologramm; und
- Fig. 5: eine schematische Ansicht zur Erläuterung der Rekonstruktion eines Sicherheitshologramms nach Fig. 4.

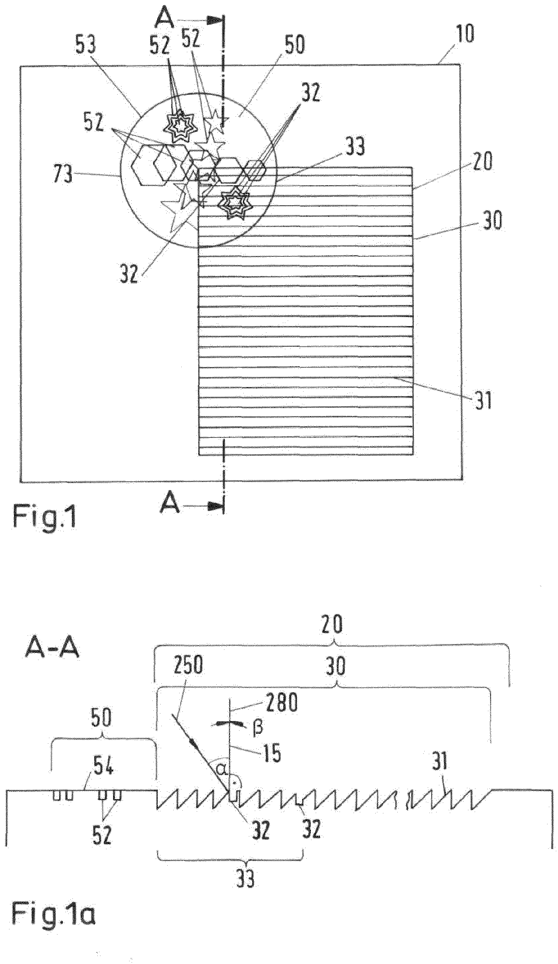

In Fig. 1 ist schematisch eine Draufsicht auf einen Hologrammmaster 10 dargestellt. Dieser umfasst einen Individualisierungsbereich 20, der bei der dargestellten Ausführungsform deckungsgleich mit einem ersten Beugungsbereich 30 ist. In dem ersten Beugungsbereich 30 ist die Oberfläche des Masters 10 als Blazegitter 31 ausgebildet. Zusätzlich sind in dem ersten Beugungsbereich 30 kinetische Strukturen 32 ausgebildet. Bei der dargestellten Ausführungsform sind die kinetischen Strukturen 32 nur in einem Viertelkreisgebiet 33, welches in einer oberen linken Ecke des ersten Beugungsbereichs 30 ausgebildet ist, angeordnet. An den Individualisierungsbereich 20 und den ersten Beugungsbereich 30 schließt sich bei der dargestellten Ausführungsform ein weiterer Kinetikbereich 50 an, der in der dargestellten Ausführungsform ein Dreiviertelkreisgebiet 53 ist, welches sich mit dem Viertelkreisgebiet 33 zu einem vollständigen Kreisgebiet 73 ergänzt. Auch der weitere Kinetikbereich 50 weist weitere kinetische Beugungsstrukturen 52 auf. Im weiteren Kinetikbereich 50 ist der Hintergrund als ebene Fläche, vorzugsweise als metallisch verspiegelte Fläche, oder ebenfalls als Blazegitter ausgebildet. Das Blazegitter im weiteren Kinetikbereich 50 kann verschieden von dem Blazegitter 31 in dem Individualisierungsbereich 20 ausgebildet sein.

In Fig. 1a ist eine Schnittzeichnung entlang einer Schnittlinie A-A der Fig. 1 schematisch dargestellt. Zu erkennen ist, dass in dem ersten Beugungsbereich 30, der deckungsgleich mit dem Individualisierungsbereich 20 ist, ein Blazegitter 31 ausgebildet ist. In dem Viertelkreisgebiet 33 befinden sich zusätzlich auf/oder in dem Blazegitter 31 kinetische Beugungsstrukturen 32. Diese setzen sich fort, beziehungsweise sind ebenfalls als weitere Beugungsstrukturen 52 in dem weiteren Kinetikbereich 50 ausgebildet, dessen Oberfläche bis auf die weiteren kinetischen Beugungsstrukturen 52 eben ausgebildet ist.

Eingezeichnet sind ebenfalls eine Solleinfallsrichtung 250 sowie eine Sollbeugungsrichtung 280, für die das Blazegitter 31 optimiert ist. Hierbei gilt die Optimierung für eine Wellenlänge, beispielsweise Licht im grünen Wellenlängenbereich. Die Solleinfallsrichtung 250 ist über einen Winkel α gegenüber der Oberflächennormale 15 des Masters 10 festgelegt und beträgt im dargestellten Beispiel beispielsweise etwa 45 Grad. Die Sollbeugungsrichtung 280 ist über einen Winkel β gegenüber der Oberflächennormale 15 des Hologrammmasters 10 festgelegt, der im dargestellten Beispiel beispielsweise 0 beträgt. Dies bedeutet, dass das von dem Blazegitter 31 gebeugte Licht, welches unter der Solleinfallsrichtung 250 einfällt, senkrecht zur Oberfläche des Hologrammmasters 10 gebeugt wird.

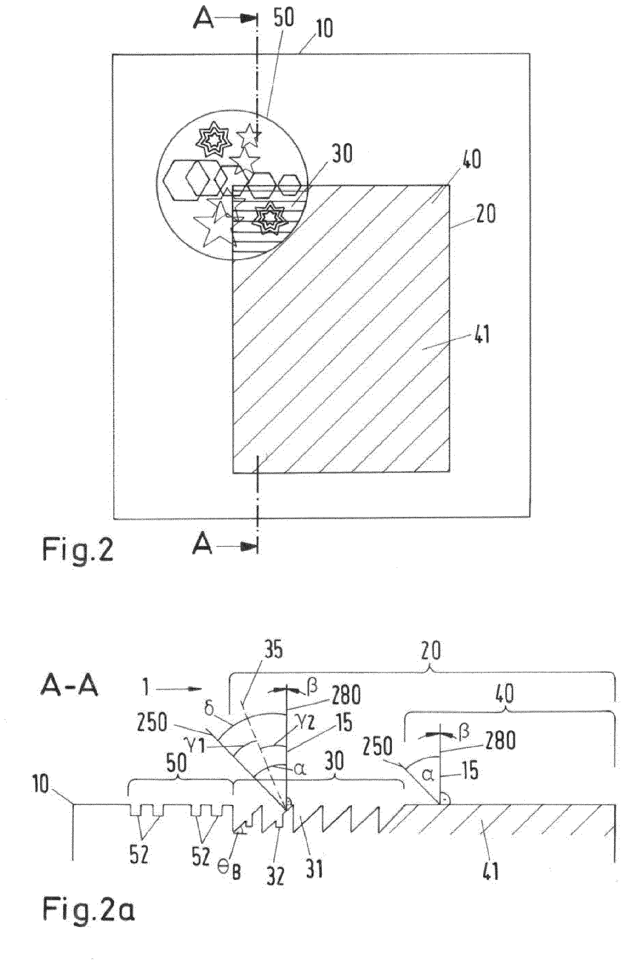

In Fig. 2 ist eine alternative Ausführungsform eines Hologrammmasters 10 gezeigt. Gleiche technische Merkmale weisen in allen Figuren dieselben Bezugszeichen auf und werden nicht noch einmal ausführlich erläutert. Die Ausführungsform unterscheidet sich von der Ausführungsform nach Fig. 1 dadurch, dass der Individualisierungsbereich 20 neben dem ersten Beugungsbereich 30, in dem ein Blazegitter 31 ausgebildet ist, einen zweiten Beugungsbereich 40 umfasst, der holografische Beugungsstrukturen 41, insbesondere ein Hologramm einer Streuscheibe oder diffus reflektierenden Fläche, aufweist.

In Fig. 2a ist eine schematische Schnittzeichnung entlang einer Schnittlinie A-A dargestellt. Zu erkennen ist, dass der Individualisierungsbereich 20 in dem ersten Beugungsbereich 30 das Blazegitter 31 aufweist und in dem zweiten Beugungsbereich 40 die holografischen Beugungsstrukturen 41 aufweist. Diese sind beispielsweise in einem Hologrammfilm ausgebildet, der in den Hologrammmaster 10 eingearbeitet ist. Zu erkennen ist, dass bei einer bevorzugten Ausführungsform unter der Solleinfallsrichtung 250 einfallendes Licht, sowohl von dem Blazegitter 31 als auch von den holografischen Beugungsstrukturen 41 unter derselben Sollbeugungsrichtung 280 gebeugt wird. Hierdurch wird es möglich, mit Licht, welches unter derselben Richtung einfällt, jedoch über die Fläche des Individualisierungsbereichs 20 räumlich hinsichtlich der Intensität moduliert ist, ein Intensitätsmuster als Individualisierungsinformation in ein Hologramm zu kopieren, wobei das Licht sowohl beim Kopierprozess unter derselben Solleinfallsrichtung für den ersten Beugungsbereich 30 und zweiten Beugungsbereich 40 einfallen kann und später bei der Rekonstruktion des im Kopierverfahren erzeugten Hologramms auch unter derselben Solleinfallsrichtung des Referenzlichts rekonstruiert, sodass die Individualisierungsinformation über die gesamte Fläche des Individualisierungsbereichs 20 gleichzeitig wahrnehmbar ist.

Ein Blazewinkel θ_{B} des Blazegitters 31 ist vorzugsweise so ausgebildet, dass eine Oberflächennormale 34 der Blazegitterflächen 35 den Winkel δ zwischen der Solleinfallsrichtung und der Sollbeugungsrichtung 280 halbiert, sodass der Winkel zwischen der Solleinfallsrichtung 250 und der Oberflächennormale 34 der Blazegitterflächen 35 durch einen Winkel γ1 und der Winkel von der Oberflächennormale 34 zu der Sollbeugungsrichtung 280 durch einen Winkel γ2 festgelegt ist, wobei die Beträge γ1 und γ2 gleich sind. Bei dieser bevorzugten Wahl des Blazewinkels θ_{B} wird eine besonders hohe maximale Beugungseffizienz des Blazegitters unter der Sollrekonstruktionsgeometrie erreicht, welche durch die Solleinfallsrichtung 250 und die Sollbeugungsrichtung 280 festgelegt ist.

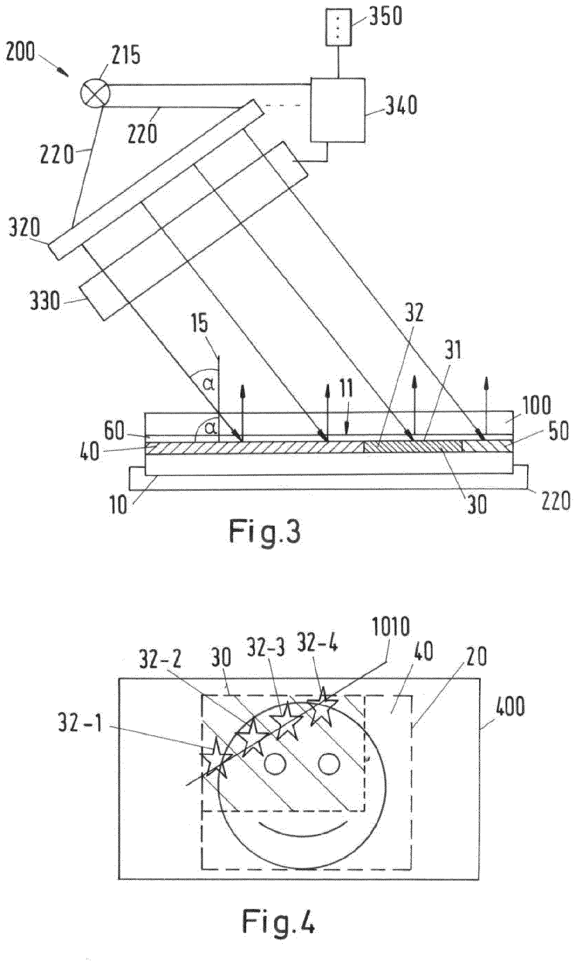

In Fig. 3 ist schematisch das Herstellen von Sicherheitshologrammen 100 im Rahmen eines Kopierverfahrens dargestellt. Gezeigt ist eine Kopiervorrichtung 200. Diese umfasst eine Masterhalterung 210, in welcher ein Hologrammmaster 10 ähnlich der Ausführungsform nach Fig. 2 schematisch dargestellt ist. Der Hologrammmaster 10 weist eine Individualisierungsbereich 20 auf, der einen ersten Beugungsbereich 30, in dem ein Blazegitter 31 und kinetische Beugungsstrukturen 32 ausgebildet sind, sowie einen unmittelbar angrenzenden zweiten Beugungsbereich 40 aufweist, in dem holografische Beugungsstrukturen 41 ausgebildet sind. Der erste Beugungsbereich 30 und der zweite Beugungsbereich 40 füllen den Individualisierungsbereich 20 vollständig aus. Der Hologrammmaster 10 weist an einer Oberfläche 11 eine Anti-Newton-Beschichtung 60 auf. Auf den Hologrammmaster 10 wird ein holografisches Aufzeichnungsmaterial 100, beispielsweise ein Fotopolymerfilm, in Kontakt aufgebracht. Das holografische Aufzeichnungsmaterial 100 kann neben der Fotopolymerschicht gegebenenfalls eine transparente Trägerschicht und/oder eine Schutzschicht aufweisen (nicht dargestellt).

Die Vorrichtung 200 umfasst eine Lichtquelle 215, welche beispielsweise als Laser ausgebildet ist. Die Lichtquelle 215 erzeugt kohärentes Licht 220, welches auf eine Lichtführungsoptik 320 geführt ist. Die Lichtführungsoptik 320 kann verschiedene Komponenten enthalten, wie beispielsweise Strahlformungselemente, Ablenkungselemente, Spiegel, aber auch aktive Elemente, die ein sukzessives Führen des kohärenten Lichts 200 beim Belichten über den Hologrammmaster 10 ermöglichen. Das kohärente Licht 220 wird zusätzlich durch oder über einen räumlichen Lichtmodulator 330 geführt, der örtlich die Lichtintensität des kohärenten Lichts 200 variiert. Die örtliche Variation wird über eine Steuereinrichtung 340 gesteuert, welche Individualisierungsdaten 350 empfängt. Diese stellen beispielsweise ein Porträtbild in Helligkeitsstufen oder Grauwerten dar. Entsprechend den Grauwerten oder Helligkeitsstufen wird das kohärente Licht 220 durch den räumlichen Lichtmodulator 330 in räumlich intensitätsmoduliertes Licht 230 überführt. Dieses räumlich intensitätsmodulierte Licht 230 wird entlang der Solleinfallsrichtung 250 durch das holografische Aufzeichnungsmaterial 100 auf den Hologrammmaster 10 geführt. Dieses unter dem Winkel α gegenüber der Oberflächennormalen 15 des Hologrammmasters 10 auftreffende modulierte kohärente Licht 230 wird im Individualisierungsbereich 20 sowohl von der holografischen Beugungsstruktur 41 im zweiten Beugungsbereich 40 als auch vom Blazegitter 31 im ersten Beugungsbereich 30 des Individualisierungsbereichs 20 unter der Sollbeugungsrichtung 280, welche parallel zur Oberflächennormale 15 orientiert ist, gebeugt und interferiert in dem holografischen Aufzeichnungsmaterial 100 mit dem unter der Solleinfallsrichtung 250 auf das holografische Aufzeichnungsmaterial 100 auftreffenden und dieses durchstrahlenden modulierten Licht 230. Hierdurch entsteht in dem holografischen Aufzeichnungsmaterial 100 ein Interferenzmuster, welches die Beugungsstrukturen des Hologrammmasters 10 örtlich intensitätsmoduliert in das holografische Aufzeichnungsmaterial 100 kopiert. In dem weiteren Kinetikbereich 50 werden die weiteren kinetischen Strukturen 52 mit nicht moduliertem Licht in das holografische Aufzeichnungsmaterial 100 belichtet.

Die kinetischen Beugungsstrukturen 32 in dem ersten Beugungsbereich 30, das heißt dem Überlappungsbereich zwischen den kinetischen Beugungsstrukturen 32 und dem Individualisierungsbereich 20, werden vorzugsweise in dem Belichtungsschritt der Individualisierung in das holografische Aufzeichnungsmaterial 100 gespeichert. Entweder erfolgt dieses mit der entsprechenden modulierten Intensität, die einem Helligkeitswert (Graustufenwert) der individuellen Information an der Position der kinetischen Beugungsstruktur entspricht, oder mit einer Mindestintensität, sofern das modulierte Licht gemäß der individuellen Information einen Intensitätswert aufweist, der unterhalb einer Schwelle liegt, ab der in dem holografische Aufzeichnungsmaterial 100 beugende Strukturen gespeichert werden. Das Kopieren kann auch mit einer festgelegten, ausgewählten Intensität, beispielsweise 80% der Maximalintensität (oder einem anderen Wert) erfolgen. Der Prozentsatz bezieht sich auf den maximalen Helligkeitswert (Graustufenwert) der Individualisierungsinformation, der sich im belichteten Aufzeichnungsmaterial 100 bei der Rekonstruktion als Verhältnis der sich ergebenden gespeicherten Beugungseffizienz im Verhältnis zur maximalen Beugungseffizienz ausdrückt.

In Fig. 4 ist schematisch ein im Kontaktkopierverfahren hergestelltes Sicherheitshologramm 400 dargestellt. Dieses umfasst lediglich einen Individualisierungsbereich 20, der einen ersten Beugungsbereich 30 (leicht schraffiert) und einen zweiten Beugungsbereich 40 (nicht schraffiert) umfasst.

Im ersten Beugungsbereich 30 ist individualisiert ein Blazegitter in unterschiedlichen Helligkeitsstärken gespeichert. Zusätzlich sind überlappend kinetische Strukturen 32-1 bis 32-4 holografisch gespeichert, die vorzugsweise unter leicht unterschiedlichen Geometrien bezüglich des einfallenden Lichts und des gebeugten Lichts verglichen mit dem individualisiert gespeicherten Blazegitter rekonstruieren.

In dem zweiten Beugungsbereich 40 ist eine holografische Beugungsstruktur 41, beispielsweise ein Hologramm einer Streuscheibe oder eines diffus streuenden Spiegels, gespeichert.

Sowohl das Blazegitter 31 als auch die holografische Beugungsstruktur 41 sind somit jeweils intensitätsmoduliert, das heißt räumlich mit unterschiedliche Intensitäten aufweisendem Licht kopiert worden, so dass sowohl das holografisch kopierte Blazegitter 31 als auch die holografisch kopierten holografischen Beugungsstrukturen 41 örtlich unterschiedliche Beugungseffizienzen aufweisen. Diese sind nicht auf unterschiedliche Beugungseffizienzen des Hologrammmasters 10 an den entsprechenden Positionen zurückzuführen, sondern auf das individualisierte Kopieren. Hierdurch ist in dem Individualisierungsbereich 20 ein Helligkeitsmuster, beispielsweise in Form eines Portraitbilds, bei einer vollflächigen Rekonstruktion unter einer Sollrekonstruktionsgeometrie, die über eine Sollbelichtungsrichtung und eine Sollbeugungsrichtung festgelegt ist, erfassbar. Durch die unterschiedlichen Helligkeitsstufen, mit denen die im Hologrammmaster vollflächig, vorzugsweise homogen, beugende holografische Beugungsstruktur 41 (z.B. die Streuscheibe) und das vollflächig, vorzugsweise homogen, beugende Blazegitter 31 gespeichert sind, ist in diesen Helligkeitsstufen die individualisierende Information bei der Rekonstruktion erfassbar.

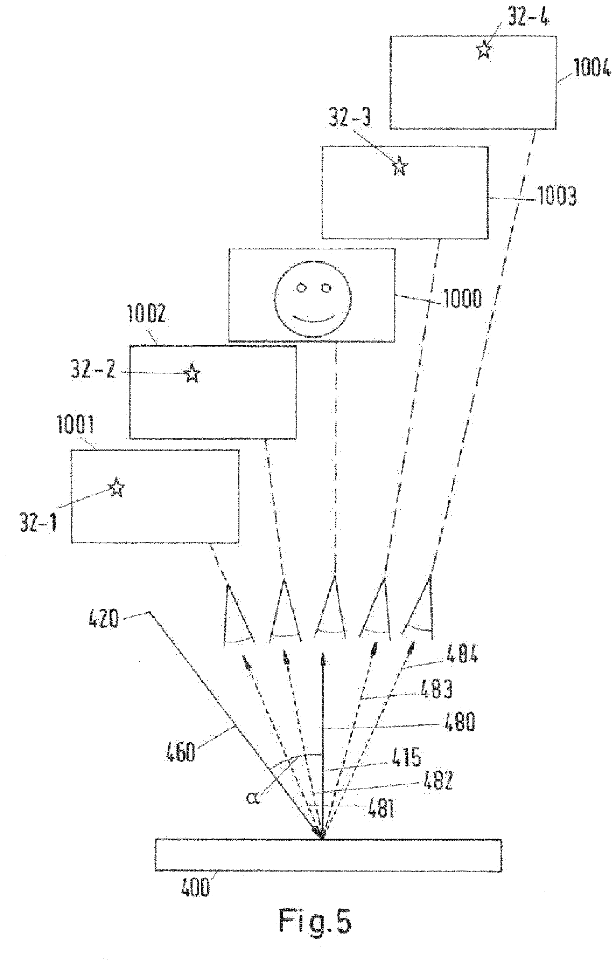

In Fig. 5 ist schematisch die Rekonstruktion des im Kopiervorgang hergestellten Sicherheitshologramms 400 nach Fig.4, welches in das holografische Aufzeichnungsmaterial 100 kopiert ist, dargestellt. Referenzlicht 420 fällt unter der Sollbelichtungsrichtung 450, welche der Solleinfallsrichtung 250 des Hologrammmasters 10 entspricht, also unter einem Winkel α, hier von etwa 45 Grad, bezogen auf die Oberflächennormale 415 des Sicherheitshologramms 400 auf das Sicherheitshologramm 400. Hierdurch wird die personalisierte Information in dem Personalisierungsbereich 20 rekonstruiert, sodass das Portraitbild in Form eines Helldunkelmusters in der Farbe des Lichts, mit dem das Sicherheitshologramm 400 kopiert wurde und jetzt rekonstruiert wird, erfassbar ist. Unter der Sollbeugungsrichtung 480, erhält man eine Abbildung, die der schematisch dargestellten Abbildung 1000 entspricht. Kinetikstrukturen sind bei dieser Ausführungsform im Individualisierungsbereich 20 bei einer Betrachtung unter der Sollbeugungsrichtung 480 nicht zu erkennen.

Es sind ferner weitere abweichende Betrachtungsrichtungen 481-484 sowie die zugehörigen erfassbaren Abbildungen 1001-1004 schematisch dargestellt. In diesen Abbildungen sind jeweils unterschiedliche kinetische Beugungsstrukturen 32-1 bis 32-4, die jeweils als Stern ausgebildet sind, erfassbar. Ändert man seine Betrachtungsrichtung somit von 481 zu 484 scheint der Stern in den Individualisierungsbereich 20 in einer oberen linken Ecke, die dem ersten Beugungsbereich 30 entspricht, entlang einer schräg nach oben verlaufenden Linie 1010 (vergleiche Fig. 4) zu bewegen.

Die in den verschiedenen Figuren dargestellten Ausführungsformen sind lediglich schematisch dargestellt und stellen beispielhafte Ausführungen dar. Andere Ausführungsformen können die hier beschriebenen Merkmale in beliebiger Kombination verwenden. Beispielsweise kann vorgesehen sein, dass einzelne kinetische Strukturen auch unter der Sollrekonstruktionsgeometrie im Individualisierungsbereich 20, das heißt im ersten Beugungsbereich 30 erfassbar sind.

### Bezugszeichenliste

- 10: Hologrammmaster
- 11: Oberflächen
- 15: Oberflächennormale des Hologrammmasters
- 20: Individualisierungsbereich
- 30: erster Beugungsbereich
- 31: Blazegitter
- 32: kinetische Beugungsstrukturen
- 32-1 - 32-4: kinetische Beugungsstrukturen
- 33: Viertelkreisgebiet
- 40: zweiter Beugungsbereich
- 41: holografische Beugungsstruktur
- 50: weiterer Kinetikbereich
- 52: weitere kinetische Beugungsstrukturen
- 53: Dreiviertelkreisgebiet
- 54: Oberflächennormale einer Blazegitterfläche
- 55: Blazegitterfläche
- 60: Anti-Newton-Beschichtung
- 73: vollständiges Kreisgebiet
- 100: holografisches Aufzeichnungsmaterial
- 200: Kopiervorrichtung
- 210: Masterhalterung
- 215: Lichtquelle
- 220: kohärentes Licht
- 230: moduliertes kohärentes Licht
- 250: Solleinfallsrichtung
- α: Winkel der Solleinfallsrichtung gegen die Oberflächennormale des Hologrammmasters
- θ_{B}: Blazewinkel
- δ: Winkel zwischen Solleinfallsrichtung und Sollbeugungsrichtung
- 280: Sollbeugungsrichtung
- β: Winkel der Sollbeugungsrichtung gegen die Oberflächennormale des Hologrammmasters
- 320: Lichtführungsoptik
- 330: räumlicher Lichtmodulator
- 340: Steuereinrichtung
- 350: Individualisierungsdaten
- 400: Sicherheitshologramm
- 415: Oberflächennormal des Sicherheitshologramms
- 450: Sollbelichtungsrichtung
- 480: Sollbeugungsrichtung
- 481-484: weitere Betrachtungsrichtungen
- 1000: erfasste Abbildung
- 1001-1004: erfasste Abbildungen

## Patentansprüche

1. Hologrammmaster (10) für die Herstellung von individualisierten Hologrammen (400) mit kinetischen Beugungsstrukturen (32) umfassend:
einen zusammenhängenden Individualisierungsbereich (20), der mindestens einen ersten Beugungsbereich (30)
umfasst,
wobei der mindestens eine erste Beugungsbereich (30) ein verspiegeltes Blazegitter (31) mit darin integrierten oder darauf integrierten kinetischen Beugungsstrukturen (32) aufweist,
**dadurch gekennzeichnet, dass**
der Hologrammmaster (10) eine Anti-Newton-Beschichtung (60) aufweist.

2. Hologrammmaster (10) nach Anspruch 1, **dadurch gekennzeichnet, dass** der eine zusammenhängende Individualisierungsbereich (20) mindestens einen zweiten Beugungsbereich (40) umfasst,
wobei der mindestens eine zweite Beugungsbereich (40) holografische Beugungsstrukturen (41) aufweist.

3. Hologrammmaster (10) nach Anspruch 2, **dadurch gekennzeichnet, dass** die holographischen Beugungsstrukturen (41) in dem mindestens einen zweiten Beugungsbereich (40) ein Hologramm einer gleichmäßig streuenden Fläche sind, welche ausgebildet sind, Licht einer bezüglich des Hologrammmasters festgelegten Solllichteinfallrichtung (250) in eine begrenzte Streukeule um eine bezüglich des Hologrammmasters definierte Sollbeugungsrichtung (280) zu beugen.

4. Hologrammmaster (10) nach einem der vorausgehenden Ansprüche, **dadurch gekennzeichnet, dass** das Blazegitter (31) ausgebildet ist, unter der festgelegten Solleinfallsrichtung (250) bezüglich des Hologrammmasters (10) einfallendes Licht in die bezüglich des Hologrammmasters (10) festgelegte Sollbeugungsrichtung (280) zu beugen.

5. Hologrammmaster (10) nach Anspruch 4, **dadurch gekennzeichnet, dass** der Blazewinkel (θ_{B}) so angepasst ist, dass unter der Solleinfallsrichtung (250) einfallendes Licht an den spiegelnden Flächen (35) des Blazegitters (31) in die Sollbeugungsrichtung (280) gespiegelt wird.

6. Hologrammmaster (10) nach einem der vorangehenden Ansprüche, **dadurch gekennzeichnet, dass** das Blazegitter (31) für eine Beugung von Licht mit einer Wellenlänge optimiert ist, die einer Rekonstruktionswellenlänge der holographischen Beugungsstrukturen (41) des mindestens einen zweiten Beugungsbereichs (40) entspricht.

7. Hologrammmaster (10) nach einem der vorangehenden Ansprüche, **dadurch gekennzeichnet, dass** die kinetischen Beugungsstrukturen (32) kein unter der Solleinfallsrichtung (250) einfallendes Licht der Rekonstruktionswellenlänge in die Sollbeugungsrichtung (280) beugen.

8. Verfahren zum Herstellen eines individualisierten Sicherheitshologramms (400) mit kinetischen Beugungsstrukturen (32) umfassend die Schritte:
Bereitstellen eines Hologrammmasters (10) nach einem der Ansprüche 1 bis 7, Bereitstellen eines holographischen Aufzeichnungsmaterials (100);
Anordnen des holographischen Aufzeichnungsmaterials (100) in Kontakt mit dem Hologrammmaster (10);
Erzeugen von kohärentem Licht (220);
Einstrahlen des kohärenten Lichts durch das holographische Aufzeichnungsmaterial (100) auf den Hologrammmaster (10), und Erzeugen von gebeugtem Licht und/oder reflektiertem Licht, welches jeweils mit dem eingestrahlten kohärenten Licht (220) in dem holographischen Aufzeichnungsmaterial (100) interferiert, um das individualisierte Sicherheitshologramm (400) zu speichern,
wobei eine Intensität des eingestrahlten Lichts (230) in dem Individualisierungsbereich örtlich unterschiedlich bezüglich der Intensität moduliert wird, um eine individualisierte Information in einem ersten Beugungsbereich (30) zu speichern, in dem zusätzlich kinetischen Beugungsstrukturen (32) gespeichert werden,
**dadurch gekennzeichnet, dass**
beim Anordnen des holographischen Aufzeichnungsmaterials (100) in Kontakt mit dem Hologrammmaster (10) das holographischen Aufzeichnungsmaterials (100) in Kontakt mit der Anti-Newton-Beschichtung (60) des Hologrammmasters (10) gebracht wird.

## Claims

1. A hologram master (10) for producing individualized holograms (400) with kinetic diffraction structures (32) comprising:
a contiguous individualization region (20), which comprises at least one first diffraction region (30),
wherein the at least one first diffraction region (30) has a reflective blazed grating (31) with kinetic diffraction structures (32) integrated therein or thereon,
**characterized in that**
the hologram master (10) has an anti-Newton coating (60).

2. The hologram master (10) according to claim 1, **characterized in that** the one contiguous individualization region (20) comprises at least one second diffraction region (40),
wherein the at least one second diffraction region (40) has holographic diffraction structures (41).

3. The hologram master (10) according to claim 2, **characterized in that** the holographic diffraction structures (41) in the at least one second diffraction region (40) are a hologram of a uniformly scattering surface, which are configured to diffract light of a target light incidence direction (250) defined with respect to the hologram master into a limited scattering lobe about a target diffraction direction (280) defined with respect to the hologram master.

4. The hologram master (10) according to any one of the preceding claims, **characterized in that** the blazed grating (31) is configured to diffract incident light below the specified target incidence direction (250) with respect to the hologram master (10) in the target diffraction direction (280) specified with respect to the hologram master (10).

5. The hologram master (10) according to claim 4, **characterized in that** the blaze angle (θ_{B}) is adjusted such that light incident at the target incidence direction (250) is reflected at the reflective surfaces (35) of the blazed grating (31) in the target diffraction direction (280).

6. The hologram master (10) according to any one of the preceding claims, **characterized in that** the blazed grating (31) is optimized for diffracting light with a wavelength which corresponds to a reconstruction wavelength of the holographic diffraction structures (41) of the at least one second diffraction region (40).

7. The hologram master (10) according to any one of the preceding claims, **characterized in that** the kinetic diffraction structures (32) do not diffract any light of the reconstruction wavelength which is incidental at the target incidence direction (250) into the target diffraction direction (280).

8. A method for producing an individualized security hologram (400) with kinetic diffraction structures (32) comprising the steps:
providing a hologram master (10) according to any one of claims 1 to 7,
providing a holographic recording material (100);
arranging the holographic recording material (100) in contact with the hologram master (10);
generating coherent light (220);
irradiating the coherent light through the holographic recording material (100) onto the hologram master (10), and generating diffracted light and/or reflected light, which interferes with the irradiated coherent light (220) in the holographic recording material (100) in order to store the individualized security hologram (400),
wherein an intensity of the irradiated light (230) in the individualization region is differently modulated locally with respective to the intensity, in order to store individualized information in a first diffraction region (30), in which in kinetic diffraction structures (32) are additionally stored,
**characterized in that**
when arranging the holographic recording material (100) in contact with the hologram master (10) the holographic recording material (100) is brought into contact with the anti-Newton coating (60) of the hologram master (10).

## Revendications

1. Matrice holographique (10) pour la fabrication d'hologrammes individualisés (400) présentant des structures de diffraction cinétiques (32), comprenant :
une zone d'individualisation d'un seul tenant (20), qui comprend au moins une première zone de diffraction (30),
où l'au moins une première zone de diffraction (30) présente un réseau échelette (31) à couche réflective avec des structures de diffraction cinétiques (32) intégrées dedans ou dessus,
**caractérisée en ce que**
la matrice holographique (10) présente un revêtement anti-Newton (60).

2. Matrice holographique (10) selon la revendication 1, **caractérisée en ce que** la zone d'individualisation d'un seul tenant (20) comprend au moins une seconde zone de diffraction (40),
où l'au moins une seconde zone de diffraction (40) présente des structures de diffraction holographiques (41).

3. Matrice holographique (10) selon la revendication 2, **caractérisée en ce que** les structures de diffraction holographiques (41) dans l'au moins une seconde zone de diffraction (40) sont un hologramme d'une surface à motif régulier, qui sont conçues pour diffracter la lumière d'une direction incidente de consigne (250) déterminée par rapport à la matrice holographique dans un lobe de diffusion limité autour d'une direction de diffraction de consigne (280) définie par rapport à la matrice holographique.

4. Matrice holographique (10) selon l'une des revendications précédentes, **caractérisée en ce que** le réseau échelette (31) est conçu pour diffracter la lumière incidente selon la direction incidente de consigne (250) par rapport à la matrice holographique (10) dans la direction de diffraction de consigne (280) déterminée par rapport à la matrice holographique (10).

5. Matrice holographique (10) selon la revendication 4, **caractérisée en ce que** l'angle de diffraction (θ_{B}) est adapté de sorte que la lumière incidente selon la direction incidente de consigne (250) est réfléchie sur les surfaces réfléchissantes (35) du réseau échelette (31) dans la direction de diffraction de consigne (280).

6. Matrice holographique (10) selon l'une des revendications précédentes, **caractérisée en ce que** le réseau échelette (31) est optimisé pour une diffraction de lumière avec une longueur d'onde qui correspond à une longueur d'onde de reconstruction des structures de diffraction holographique (41) de l'au moins une seconde zone de diffraction (40).

7. Matrice holographique (10) selon l'une des revendications précédentes, **caractérisée en ce que** les structures de diffraction cinétiques (32) ne diffractent pas de lumière incidente selon la direction incidente de consigne (250) de la longueur d'onde de reconstruction dans la direction de diffraction de consigne (280).

8. Procédé de fabrication d'un hologramme de sécurité individualisé (400) comportant des structures de diffraction cinétiques (32), comprenant les étapes consistant à :
préparer une matrice holographique (10) selon l'une des revendications 1 à 7,
préparer un matériau d'enregistrement holographique (100) ;
disposer le matériau d'enregistrement holographique (100) en contact avec la matrice holographique (10) ;
générer une lumière cohérente (220) ;
émettre la lumière cohérente à travers le matériau d'enregistrement holographique (100) sur la matrice holographique (10) et générer une lumière diffractée et/ou une lumière réfléchie qui interfère respectivement avec la lumière cohérente émise (220) dans le matériau d'enregistrement holographique (100) pour enregistrer l'hologramme de sécurité individualisé (400),
dans lequel une intensité de la lumière incidente (230) dans la zone d'individualisation est modulée différemment selon les emplacements en ce qui concerne l'intensité afin d'enregistrer une information individualisée dans une première zone de diffraction (30) dans laquelle sont enregistrées, en plus, des structures de diffraction cinétiques (32),
**caractérisée en ce que**
lors de la disposition du matériau d'enregistrement holographique (100) en contact avec la matrice holographique (10), le matériau d'enregistrement holographique (100) est mis en contact avec le revêtement anti-Newton (60) de la matrice holographique (10).
